# EUROPÄISCHE PATENTSCHRIFT

(11) **EP 3 885 184 B1**
(45) Veröffentlichungstag und Bekanntmachung des Hinweises auf die Patenterteilung: **19.07.2023**
(21) Anmeldenummer: 20166089.1
(22) Anmeldetag: 26.03.2020
(51) Int. Cl.: B60N 2/28, B60N 2/818

(54) **KINDERSITZ MIT HÖHENVERSTELLBARER KOPFSTÜTZE**
CHILD SEAT WITH HEIGHT ADJUSTABLE HEADREST
SIÈGE POUR ENFANT POURVU D'UN REPOSE-TÊTE RÉGLABLE EN HAUTEUR

(43) Veröffentlichungstag der Anmeldung: 29.09.2021
(73) Patentinhaber: Hauck GmbH & Co. KG, 96242 Sonnefeld (DE)
(72) Erfinder: KIRSTEIN, Matthias, 96247 Michelau (DE)
(74) Vertreter: Raffay & Fleck

(56) Entgegenhaltungen:
- DE-U1-202012 100 739
- FR-A1- 3 096 619

## Beschreibung

Die Erfindung betrifft einen Kindersitz mit einem eine Sitzfläche aufweisenden Sitzflächenteil, einem eine Rückenlehne aufweisenden Rückenlehnenteil sowie einem mit dem Rückenlehnenteil in seiner Position relativ zu dem Rückenlehnenteil verstellbar verbundenen, eine Kopfstütze aufweisenden Kopfstützenteil. Bei dem Kindersitz ist zwischen dem Rückenlehnenteil und dem Kopfstützenteil eine Längsführung gebildet für eine in einer Längsrichtung geführte Höhenverstellung des Kopfstützenteils mit seiner Kopfstütze.

Es sind Kindersitze allgemein bekannt, die höhenverstellbare Kopfstützen aufweisen. Diese Kopfstützen sind dabei typischerweise an Kopfstützenteilen festgelegt, welche Kopfstützenteile jeweils zu einem Rückenlehnenteil in einer Längsrichtung verschiebbar an dem Rückenlehnenteil angelagert sind, um die Höhenverstellbarkeit der Kopfstütze zu ermöglichen. Solche Kindersitze können zum Beispiel in Kinderwagen bzw. Kinderkarren integrierte Sitze sein oder auch Kindersicherheitssitze zur Anordnung in Kraftfahrzeugen, wie zum Beispiel Babyschalen oder dergleichen. Entsprechende Kindericherheitssitze können auch in unterschiedlichen Anwendungen eingesetzt werden, zum Beispiel als in einem Kraftfahrzeug, beispielsweise auf einer Basis verrastbar festlegbare, Kindersicherheitssitze auf der einen Seite und andererseits als Kinderaufnahme für einen Kinderkarren oder dergleichen, indem zum Beispiel eine Sitzschale auf einem Karrenuntergestell festgelegt und daran verrastet wird.

Bei bekannten derartigen Kindersitzen ist es weiterhin üblich, dass für die Höheneinstellung der Kopfstütze ein Betätigungselement vorgesehen ist, welches einen Riegelmechanismus entriegelten bzw. verriegelt, der das Kopfstützenelement in einer in Längsrichtung eingestellten Relativposition zu dem Rückenlehnenteil fixiert. Häufig werden hierfür Riegel-Aufnahme-Paare eingesetzt, die eine Höhenverstellung der Kopfstütze in distinkten Einstellpositionen ermöglichen, zum Beispiel in fünf verschiedenen Positionen, wenn beispielsweise ein an dem Kopfstützenteil angeordneter Riegel in fünf verschiedenen Längspositionen bzw. Höhenpositionen in entsprechende Riegelaufnahmen an dem Rückenlehnenteil eingreifen kann.

Der Nachteil bei einer solchen Lösung besteht nun darin, dass eine Einstellung der Höhenpositionen der Kopfstütze nur in distinkt vorgegebenen Positionen vorgenommen werden kann, wobei zwischen den einzelnen Einstellpositionen jeweils ein erweiterter Bereich liegt, der übersprungen wird, in dem keine Festlegung der Kopfstütze und Einstellung einer Höhenpositionen möglich ist. DE 202012100739 offenbart einen Kindersitz mit einem zusätzlichem Zahnrad, das eine kontinuierliche Höhenposition ermöglicht.

Entsprechend ist es Ziel und Aufgabe der vorliegenden Erfindung, einen Kindersitz der eingangs genannten Art dahingehend weiterzubilden, dass eine Höhenpositionen der Kopfstütze, d. h. eine Relativposition der Kopfstütze zu dem Rückenlehnenteil weitestgehend kontinuierlich möglich ist, d. h. die Kopfstütze in einer Höhenpositionen relativ zu dem Rückenteil in der Spanne eines Einstellbereichs in einer im wesentlichen beliebigen Position festlegbar ist.

Diese Aufgabe wird erfindungsgemäß gelöst durch einen Kindersitz mit den Merkmalen des Patentanspruchs 1. Vorteilhafte Weiterbildungen eines solchen Kindersitzes sind in den abhängigen Ansprüchen 2 bis 11 bezeichnet.

Zunächst und in Übereinstimmung mit bekannten Kindersitzen gattungsgemäßer Art weist der erfindungsgemäße Kindersitz ein eine Sitzfläche aufweisendes Sitzflächenteil, ein eine Rückenlehne aufweisendes Rückenlehnenteil sowie ein mit dem Rückenlehnenteil in seiner Position relativ zum Rückenlehnenteil verstellbar verbundenes, eine Kopfstütze aufweisendes Kopfstützenteil auf. Zwischen dem Rückenlehnenteil und dem Kopfstützenteil ist eine Längsführung gebildet für eine in einer Längsrichtung geführte Lagen- oder Höhenverstellung des Kopfstützenteils, bzw. der Kopfstütze relativ zu dem Rückenlehnenteil.

Das Besondere an dem erfindungsgemäßen Kindersitz besteht nun darin, dass an einem ersten der Teile Kopfstützenteil und Rückenlehnenteil, z.B. an dem Kopfstützenteil, wenigstens ein eine Umfangsverzahnung aufweisendes Zahnrad rotierbar festgelegt ist und dass weiterhin an dem zweiten der Teile Kopfstützenteil und Rückenlehnenteil, z.B. an dem Rückenlehnenteil, im Bereich der Längsführung wenigstens eine sich entlang der Längsrichtung erstreckende Längsverzahnung ausgebildet ist, in der das Zahnrad mit seiner Umfangsverzahnung kämmend eingreift. Weiterhin ist wenigstens ein eine zu der Umfangsverzahnung korrespondierende Außenverzahnung aufweisendes Blockierelement an dem ersten der Teile Kopfstützenteil und Rückenlehnenteil, z.B. an dem Kopfstützenteil, angeordnet, das mittels eines Betätigungselementes zwischen einer Blockierstellung, in der es mit der Außenverzahnung in die Umfangsverzahnung des Zahnrades eingreift und so eine Rotation des Zahnrades verhindert, und einer Freigabestellung, in der die Außenverzahnung mit der Umfangsverzahnung des Zahnrades nicht in Eingriff steht und so eine Rotation des Zahnrades ermöglicht ist, verlagerbar ist.

Durch diese erfindungsgemäße und besondere Gestaltung, bei der an dem ersten der Teile Kopfstützenteil und Rückenlehnenteil wenigstens ein Zahnrad um eine Drehachse rotierbar festgelegt ist, ist das angestrebte Ziel, nämlich eine quasikontinuierlich mögliche Einstellung der Höhenpositionen der Kopfstütze relativ zu dem Rückenlehnenteil erreicht. Wenn nämlich das Blockierelement mit seiner Au-βenverzahnung außer Eingriff mit der Umfangsverzahnung des Zahnrades gebracht ist, kann das Kopfstützenteil in der Längsrichtung verlagert werden. Hierbei rotiert das Zahnrad aufgrund des Eingriffs seiner Umfangsverzahnung mit der an dem anderen der Teile Kopfstützenteil und Rückenlehnenteil vorgesehenen Längsverzahnung. Diese Rotation ist auch möglich, da das Blockierelement das Zahnrad nicht blockiert, sondern mit seiner Außenverzahnung außer Eingriff mit der Umfangsverzahnung des Zahnrades steht. Ist dann eine gewünschte Höheneinstellung der an dem Kopfstützenteil angeordneten Kopfstütze relativ zu dem Rückenlehnenteil erreicht, so wird das Blockierelement in Eingriff mit der Umfangsverzahnung des Zahnrades gebracht. Dadurch wird eine weitere Rotation des Zahnrades an dem ersten der Teile Kopfstützenteil und Rückenlehnenteil verhindert und wird das Zahnrad, das mit einer Umfangsverzahnung weiterhin in Eingriff mit der Längsverzahnung an dem anderen der Teile Kopfstützenteil und Rückenlehnenteil steht, auch relativ zu dieser Längsverzahnung positioniert gehalten, wodurch letztlich das Kopfstützenteil relativ zu dem Rückenlehnenteil in einer eingestellten Höhenpositionen festgelegt und verriegelt ist. Die Feinheit der Einstellmöglichkeit dieser Höhenverstellung ergibt sich nun aus der Anzahl und dem Umfangsabstand der Zähne in der Umfangsverzahnung des Zahnrades / in der Längsverzahnung an dem Rückenlehnenteil. Hier wird eine möglichst große Anzahl von dicht nebeneinanderstehenden Zähnen angestrebt, um eine möglichst kontinuierlich wählbare Einstellpositionen für das Kopfstützenteil relativ zu dem Rückenlehnenteil erhalten zu können.

Grundsätzlich ist es möglich, das wenigstens eine Zahnrad und das wenigstens eine Blockierelement alternativ an dem Kopfstützenteil oder dem Rückenlehnenteil anzuordnen, die wenigstens eine Längsverzahnung dann an dem jeweils anderen der genannten Teile vorzusehen. In einer aktuell bevorzugten Ausgestaltungsvariante sind Zahnrad und Blockierelement an dem Kopfstützenteil und ist die wenigstens eine Längsverzahnung an dem Rückenlehnenteil angeordnet.

Zweckmäßigerweise kann das Betätigungselement an dem Teil angeordnet sein, an dem auch Zahnrad und Blockierelement angeordnet sind, z.B. an dem Kopfstützenteil. Auf diese Weise kann z.B. in dem Kopfstützenteil ein Mechanismus integriert sein, der ein Verlagern des Blockierelements ermöglicht. So kann ein Benutzer mit einer Hand den Betätigungsmechanismus z.B. an dem Kopfstützenteil ergreifen und betätigen und zugleich mit derselben Hand das Kopfstützenteil in der Längsrichtung zur Einstellung der Höhenpositionen verschieben, entweder entlang des Rückenlehnenteils weg von der Sitzfläche ziehen oder in Richtung der Sitzfläche schieben und bei Erreichen der gewünschten Einstellpositionen durch entsprechendes Betätigen des Betätigungselements und dadurch in Eingriff Bringen des Blockierelements mit seiner Außenverzahnung mit der Umfangsverzahnung des Zahnrades diese Position in der vorstehend beschriebenen Weise fixieren.

Eine besonders effektive Verriegelung ergibt sich, wenn der Abschnitt, in dem das Blockierelement die Außenverzahnung aufweist, in einem Kreisbogen gekrümmt gebildet ist mit einem Radius, der dem Radius der kreisförmigen Außenkontur des Zahnrades entspricht. Auf diese Weise kann über einen gewissen Abschnitt der Umfangsverzahnung des Zahnrades ein Eingriff mit der Außenverzahnung des Blockierelements erhalten und damit eine sichere Festlegung des Zahnrades gegen eine unerwünschte Rotation erreicht werden. Die kreisbogenförmige Außenkontur des die Außenverzahnung aufweisenden Abschnitts des Blockierelements stellt sicher, dass die Außenverzahnung entlang des gesamten Abschnittes sicher mit der Umfangsverzahnung des Zahnrades in Eingriff gelangen und für die Dauer der Blockierstellung bleiben kann.

Das Blockierelement kann insbesondere als Blockierhebel ausgebildet sein und einen Hebelarm aufweisen, an dem die Außenverzahnung angeordnet ist. Dieser Blockierhebel kann beispielsweise um einen Drehpunkt gelagert und zwischen der Blockierstellung und der Freigabestellung hin und her schwenkbar sein. Er kann aber auch als Ganzes in einer quer zu der Erstreckung des Hebelarms gerichteten Linearbewegung mit der Außenverzahnung auf die Umfangsverzahnung an dem Zahnrad zu oder von dieser weg verlagerbar angeordnet sein.

Mit Vorteil kann das Blockierelement federbelastet in die Blockierstellung gezwungen sein. Eine solche Ausgestaltung bewirkt, dass bei nicht betätigtem Betätigungselement das Blockierelement in einer Blockierstellung ist, das Kopfstützenteil relativ zu dem Rückenlehnenteil festgelegt und in seiner Höheneinstellung fixiert ist. Nur durch Betätigen des Betätigungselements wird die Freigabestellung erreicht, in die das Blockierelement entgegen der Federkraft gezwungen wird, kann eine Höhenverstellung der Kopfstütze, bzw. des Kopfstützenteils erfolgen. So wird auch sichergestellt, dass in jedem Fall eine Verriegelung zwischen Rückenteil und Kopfstützenteil erfolgt, ohne dass es hierfür ein aktives Betätigen des Betätigungselementes etwa erlaubt, sodass auf keinen Fall Kopfstützenteil und Rückenteil in einer nicht definierten und nicht verriegelten Position zueinander verbleiben können, wenn ein Kind in den Kindersitz gesetzt und dort zum Beispiel mittels einer an dem Kindersitz vorhandenen Anschnallvorrichtung, die der Kindersitz allgemein aufweisen kann, angeschnallt worden ist.

Auch wenn es grundsätzlich möglich ist, den erfindungsgemäßen Kindersitz mit einem einzigen Zahnrad an dem ersten der Teile Kopfstützenteil und Rückenlehnenteil und mit einer einzigen Längsverzahnung an dem zweiten der Teile Kopfstützenteil und Rückenteil sowie mit einem einzigen an dem ersten der Teile Kopfstützenteil und Rückenlehnenteil angeordneten Blockierelement in der beschriebenen Weise mit einer höhenverstellbaren Kopfstütze zu gestalten und diese Kopfstütze in im wesentlichen beliebiger Höhenpositionen verriegelbar zu machen, kann, für eine weitere Absicherung des Mechanismus, vorgesehen sein, dass an dem ersten der Teile Kopfstützenteil und Rückenlehnenteil zwei jeweils eine Umfangsverzahnung aufweisende Zahnräder rotierbar festgelegt sind und dass an dem zweiten der Teile Kopfstützenteil und Rückenlehnenteil zwei Längsverzahnungen ausgebildet sind, wobei dann je eines der Zahnräder mit seiner Umfangsverzahnung in je einer der Längsverzahnungen kämmend eingreift, und dass weiterhin zwei Blockierelemente an dem ersten der Teile Kopfstützenteil und Rückenlehnenteil angeordnet sind, die jeweils mit Außenverzahnungen versehen sind und jeweils zwischen einer Blockierstellung, in der die jeweilige Außenverzahnung mit der Umfangsverzahnung des zugeordneten Zahnrades in Eingriff steht, und einer Freigabestellung, in der die jeweilige Außenverzahnung mit der Umfangsverzahnung des zugeordneten Zahnrades nicht in Eingriff steht, verlagerbar sind. Bei einer solchen Lösung wird die für die Verriegelung erforderliche Kraft durch zwei Blockierelemente getragen, sodass eine verbesserte Riegelwirkung erreicht werden kann. Grundsätzlich ist die Anordnung nicht auf ein Paar aus den jeweils aufgezählten Elementen begrenzt, sondern es können auch Konstruktionen denkbar sein, in denen sogar mehr als zwei Zahnräder, Längsverzahnungen und Blockierelemente in der jeweiligen Zusammenwirkung angeordnet sind. Allerdings haben sich jeweils zwei derartige Elemente in einem wie oben beschriebenen Zusammenwirken als praktikabel und ausreichend sicher erwiesen. In einer wie vorstehend beschriebenen Ausgestaltung kann insbesondere vorgesehen sein, dass beide Blockierelemente mit dem einen und einzigen Betätigungselement gekoppelt sind, das dann ein gemeinsames Betätigungselement für beide Blockierelemente bildet. Auf diese Weise muss ein Nutzer nicht mehrere Betätigungselemente zugleich betätigen, um eine Verstellung der Höhenpositionen des Kopfstützenteils zu erreichen, sondern genügt es, dass der Nutzer lediglich das eine und einzige Betätigungselement gebraucht, um die Höhenverstellung vorzunehmen.

Weiterhin kann bei einer wie vorstehend beschriebenen Ausgestaltung mit je zwei Zahnrädern, Längsverzahnung und Blockierelementen vorgesehen sein, dass die beiden Zahnräder mit ihren Drehpunkten auf einer senkrecht zu der Längsrichtung liegenden Linie angeordnet und an dem ersten der Teile Kopfstützenteil und Rückenlehnenteil festgelegt sind und zwischen den mit aufeinander zu weisenden Verzahnungen an dem zweiten der Teile Kopfstützenteil und Rückenlehnenteil angeordneten Längsverzahnung liegen. Diese Anordnung ist platzsparend und symmetrisch, sie kann insbesondere symmetrisch zu einer Längsmittelachse des Kopfstützenteils bzw. des Rückenlehnenteils angeordnet sein, was ein besonders günstiges Ableiten auftretender Kräfte ergibt.

Wie bereits eingangs erwähnt, kann der erfindungsgemäße Kindersitz in ganz unterschiedlichen Funktionen eingesetzt sein, zum Beispiel als Sitz in einem Kinderwagen oder Kinderkarren. Insbesondere eignet sich die erfindungsgemäß Konstruktion aber gerade für eine Sitzschale eines Kindersicherheitssitzes für Fahrzeuge, wobei die Sitzschale zugleich auch als Aufsatz für einen Kinderwagen oder eine Kinderkarre verwendet werden kann.

Mit Vorteil, und insbesondere dann, wenn der Kindersitz als Kindersicherheitssitz für Fahrzeuge verwendet wird, kann der Kindersitz eine Gurteinrichtung aufweisen, wobei wenigstens eine Schultergurtdurchführung in dem Kopfstützenteil vorgesehen ist. Diese Gestaltung erlaubt eine Einstellung der Höhe der Schultergurte relativ zu der Sitzfläche zusammen mit einer Höhenverstellung der Kopfstütze.

Weitere Vorteile und Merkmale der Erfindung ergeben sich aus der nachfolgenden Beschreibung eines Ausführungsbeispiels anhand der beigefügten Figuren. Dabei zeigen:
- Figur 1: schematisch einen Ausschnitt eines erfindungsgemäßen Kindersitz in einer möglichen Ausgestaltung und in einer Ansicht von vorn mit dem Rückenlehnenteil und dem Kopfstützenteil;
- Figur 2: schematisch eine rückwärtige Ansicht des Kopfstützenteils des erfindungsgemäßen Kindersitzes aus Figur 1;
- Figur 3: in einer Rückansicht einen vergrößerten Ausschnitt des Kopfstützenteils und des Rückenlehnenteils des Kindersitzes aus Figur 1 zur Veranschaulichung des Zusammenwirkens zwischen Zahnrad, Längsverzahnung und Blockierelement; und
- Figur 4: eine rückwärtige Ansicht des Kopfstützenteils wie in Figur 2, jedoch mit in die Freigabestellung bewegtem Blockierelement.

In den Figuren ist in drei verschiedenen Ansichten und sehr schematisch ein mögliches Ausführungsbeispiel eines erfindungsgemäßen Kindersitzes 1 dargestellt. Dabei sind die Figuren weder als maßstabsgerecht noch etwa als vollständige Konstruktionszeichnungen aufzufassen, sondern vielmehr als Prinzipskizzen, die das Erfindungsprinzip und die erfindungswesentlichen Elemente veranschaulichen sollen.

Der in dem Ausführungsbeispiel dargestellte, erfindungsgemäße Kindersitz 1 verfügt über ein hier nicht näher gezeigtes Sitzflächenteil, welches eine Sitzfläche für ein in den Kindersitz zu setzendes Kind aufweist, über ein Rückenlehnenteil 2, welches eine Rückenlehne für das Kind ausbildet, und über ein Kopfstützenteil 3, welches eine Kopfstütze 4 enthält. In dem hier gezeigten und näher erläuterten Ausführungsbeispiel ist der Kindersitz 1 eine Sitzschale für Kleinkinder und Babys, die insbesondere auch als Kindersicherheitssitz für Fahrzeuge, zum Beispiel für die Anordnung in einem Automobil, verwendet werden kann.

Das Kopfstützenteil 3 mit der darin angeordneten Kopfstütze 4 ist in einer Längsrichtung entlang des Rückenlehnenteils 2 verschiebbar. Hierdurch wird die Relativpositionen, bzw. die Höhe, der Kopfstütze 4 zu der nicht näher dargestellten Sitzfläche eingestellt und kann entsprechend der Größe des in dem Kindersitz 1 aufzunehmenden Kindes angepasst werden. In dem Kopfstützenteil 3 sind Schultergurtdurchführungen 5 vorgesehen, die bei einer Positionseinstellung des Kopfstützenteils 3 ebenfalls mit in ihrer Position verändert werden, in gleicher Weise den Abstand zu der hier nicht näher dargestellten Sitzfläche verändern, um so auch die Grundeinstellung für ein in dem Kindersitz 1 mittels eines Sicherheitsgurtes anzuschnallendes Kind festlegen zu können. An dem Kopfstützenteil 3 ist ein Betätigungselement 6 vorgesehen, mit welchem eine Verriegelung, mit der das Kopfstützenteil 3 in einer eingestellten Relativposition in Bezug auf das Rückenlehnenteil 2 in nachfolgend noch näher beschriebener Weise fixiert ist, entriegelten werden kann zum Verändern der Position des Kopfstützenteils 3 relativ zu dem Rückenlehnenteil 2.

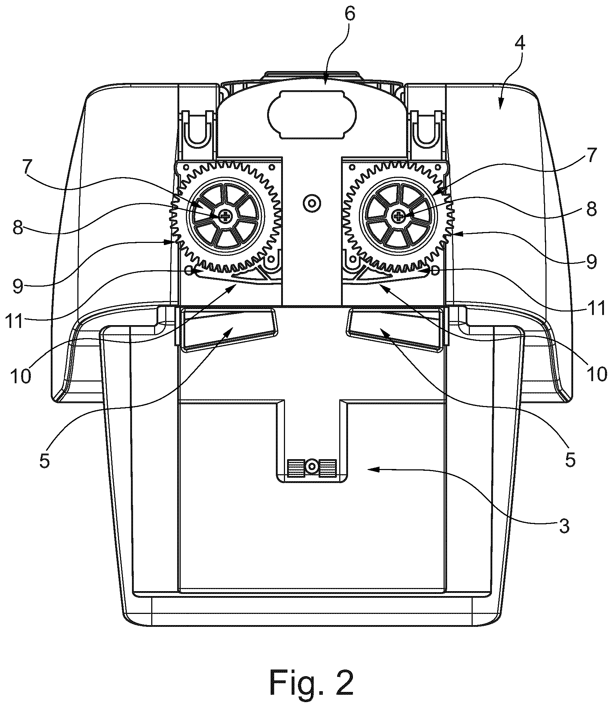

In der Figur 2 ist das Kopfstützenteil 3 losgelöst von den weiteren Elementen des Kindersitzes 1 und in einer Ansicht von hinten gezeigt. Zu erkennen ist wiederum die eigentliche Kopfstütze 4 und sind die Schultergurtdurchführungen Ziffer 5. Wesentliche, hier in der Figur 2 zu erkennende Elemente, die an dem Kopfstützenteil 3 angeordnet sind, sind Zahnräder 7, die an, hier auf einer senkrecht zu der Längsrichtung geführten Linie liegenden, Drehpunkten 8 und hier auch symmetrisch zu einer Längsmittelachse des Kopfstützenteils 3 relativ zu dem Kopfstützenteil 3 rotierbar festgelegt sind. Diese Zahnräder 7 weisen jeweils eine Umfangsverzahnung 9 auf mit einer Vielzahl von Zähnen.

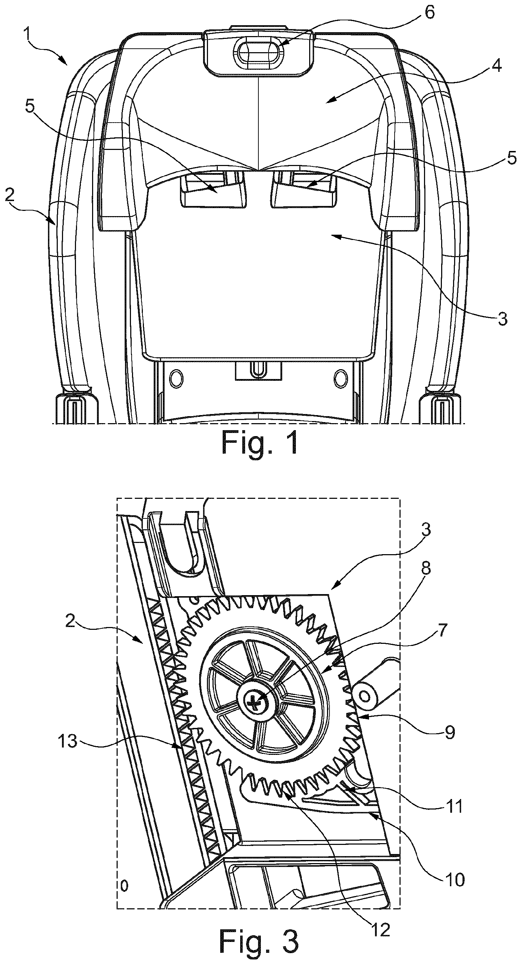

Weiterhin zu erkennen ist in Figur 2 ein Blockierhebel 10, der mit zwei Hebelarmen 11 ausgebildet ist, die jeweils eine Außenverzahnung 12 (vergleiche auch Figur 3) aufweisen. Diese Außenverzahnungen stehen in der in Figur 2 und auch in der Figur 3 gezeigten Blockierstellung des Blockierhebels 10 mit den Umfangsverzahnungen 9 der Zahnräder 7 in Eingriff. Die Konturen der Außenverzahnungen 12 sind dabei jeweils in einem Kreisbogen geführt, der einen zu dem Radius des Außenumfangs des jeweiligen Zahnrades 7 korrespondierenden Radius gekrümmt verläuft. In der in den Figuren 2 und 3 gezeigten Position, in der die Außenverzahnungen 12 der Hebelarme 11 des Blockierhebels 10 mit den Umfangsverzahnung 9 der Zahnräder 7 in Eingriff stehen, der Blockierstellung, verhindern die Arme 11 des Blockierhebels 10, dass die Zahnräder 7 um die Drehpunkte 8 rotieren können. Durch ein Betätigen des Betätigungselementes 6 wird vermittels einer hier nicht näher gezeigten Mechanik und gegen eine Federlast der Blockierhebel 10 mit seinen Hebelarmen 11 und den daran ausgebildeten Au-βenverzahnungen 12 außer Eingriff mit den Umfangsverzahnungen 9 der Zahnräder 7 gebracht, sodass die Zahnräder 7 um die Drehpunkte 8 rotieren können.

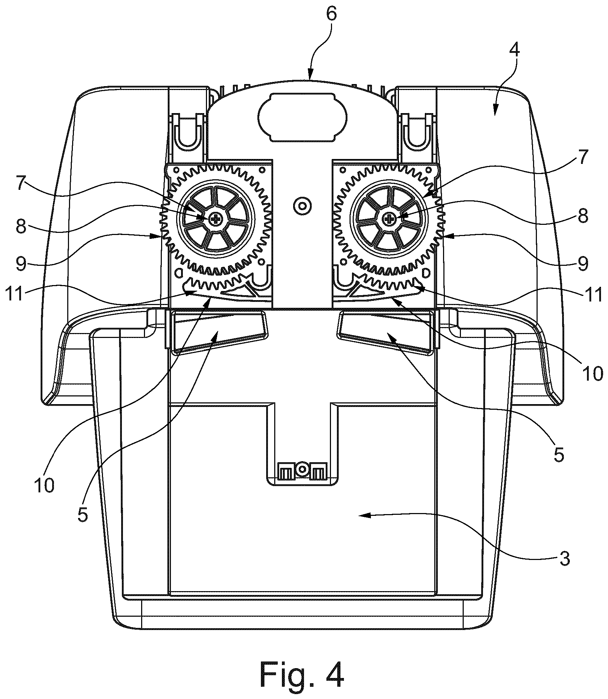

Diese Stellung des Blockierhebels 10, die Freigabestellung, ist in Figur 4 gezeigt. Wird das Betätigungselement 6 wiederum losgelassen, zwingt die Federkraft den Blockierhebel 10 mit den an den Hebelarmen 11 gebildeten Außenverzahnungen 12 wieder in Eingriff mit den Umfangsverzahnungen 9 der Zahnräder 7, sodass diese wiederum gegen eine weitere Rotation um die Drehpunkte 8 verriegelt und blockiert sind.

In Figur 3 ist nun zu erkennen, wie die Zahnräder 7 (gezeigt ist dies hier am Beispiel eines Zahnrades 7, jenes in der Figur 2 links zu erkennenden Zahnrades 7) zudem mit ihrer Umfangsverzahnung 9 in Eingriff mit einer Längsverzahnung 13 stehen, die an dem Rückenlehnenteil 2 ausgebildet ist. In der wie in Figur 3 ebenfalls zu erkennenden Blockierstellung des Blockierhebels 10 wird das Zahnrad 7 in seiner Rotationsstellung um den Drehpunkt 8 festgehalten, sodass es für einen Halt einer eingestellten Relativposition des Kopfstützenteils 3 relativ zu dem Rückenlehnenteil 2 sorgt, da es mit seiner Umfangsverzahnung 9 in der Längsverzahnung 13 an dem Rückenlehnenteil 2 kämmt und entsprechend darin in der Position gehalten ist. Wird der Blockierhebel 10 mit dem hier gezeigten Hebelarm 11 nun von dem Zahnrad 7 dergestalt abgehoben, dass die Außenverzahnung 12 außer Eingriff mit der Umfangsverzahnung 9 gerät (vergleiche Figur 4), was durch Betätigen des Betätigungselementes 6 erfolgt, so kann das Zahnrad 7 um den Drehpunkt 8 relativ zu dem Kopfstützenteil 3 rotieren und sich dabei mit seiner Umfangsverzahnung 9 entlang der Längsverzahnung 13 an dem Rückenlehnenteil 2 bewegen, sodass das Kopfstützenteil 3 in der Längsrichtung in Richtung der Sitzfläche gedrückt, beziehungsweise von dieser weggezogen werden kann. Wird das Betätigungselement 6 dann losgelassen, wird der Blockierhebel 10 mit seinen Hebelarmen 11 und deren Außenverzahnungen 12 zurück in Eingriff mit der jeweiligen Umfangsverzahnung 9 der Zahnräder 7 gebracht, sodass die Zahnräder 7 blockieren und durch ihren Eingriff mit der Umfangsverzahnung 9 in der Längsverzahnung 13 die Relativposition des Kopfstützenteils 3 zu dem Rückenlehnenteil 2 fixieren. Durch die feingliedrige Umfangsverzahnung 9 der Zahnräder 7 kann hier eine Einstellung in nahezu kontinuierlich gewählter Positionierung erfolgen, ohne dass es etwa nur eine vorgegebene Anzahl von Einstellpositionen über eine lange Einstellstrecke gibt. Diese Lösung erlaubt also eine besonders feine und individuelle Höheneinstellung des Kopfstützenteils 3 relativ zu dem Rückenlehnenteil 2 und damit der Kopfstütze 4 und, im gezeigten Ausführungsbeispiel, auch der Schultergurtdurchführungen 5 des erfindungsgemäßen Kindersitzes 1. Die Betätigung des Blockierhebels 10 über das Betätigungselement 6 erlaubt dabei eine einfache Entriegelung und zugleich ein Einstellen der Höhenpositionen des Kopfstützenteils 3 mit einer Hand, indem mit dieser Hand das Betätigungselement 6 betätigt und zugleich das Kopfstützenteil 3 relativ zu dem Rückenlehnenteil 2 verlagert wird.

In dem Ausführungsbeispiel ist eine Ausgestaltung der Erfindung gezeigt, bei der die Zahnräder 7 und der Blockierhebel 10 an dem Kopfstützenteil 3 angeordnet sind und mit den an dem Rückenlehnenteil 2 angeordneten Längsverzahnungen 13 zusammenwirken. Es ist für den Fachmann aber ersichtlich und liegt ebenfalls im Rahmen der Erfindung, die Anordnung insoweit umzukehren, als dass die Zahnräder 7 und der Blockierhebel 10 an dem Rückenlehnenteil 2 angeordnet sind und die Längsverzahnungen 13 an dem Kopfstützenteil 3. Bei einer solchen kinematisch umgekehrten Anordnung ist es dann zweckmäßig, das Betätigungselement ebenfalls an dem Rückenlehnenteil 2 vorzusehen. Auch können statt eines, in dem Ausführungsbeispiel längsverschiebbar dargestellten Blockierhebels 10 auch getrennte Blockierhebel, für jedes der Zahnräder 7 ein solcher Blockierhebel, vorgesehen sein, die dann z.B. auch durch Schwenkbewegungen zwischen der Blockierstellung und der Freigabestellung verlagert werden können.

Aus der vorstehenden Beschreibung eines Ausführungsbeispiels sind noch einmal die besonderen Vorteile einer erfindungsgemäßen Gestaltung deutlich geworden, wobei noch einmal zu betonen ist, dass das vorstehend beschriebene Ausführungsbeispiel nur eine mögliche Gestaltungsvariante darstellt, die Erfindung in ihrer allgemeinen Tragweite nicht einschränken soll.

### Bezugszeichenliste

- 1: Kindersitz
- 2: Rückenlehnenteil
- 3: Kopfstützenteil
- 4: Kopfstütze
- 5: Schultergurtdurchführung
- 6: Betätigungselement
- 7: Zahnrad
- 8: Drehpunkt
- 9: Umfangsverzahnung
- 10: Blockierhebel
- 11: Hebelarm
- 12: Außenverzahnung
- 13: Längsverzahnung

## Patentansprüche

1. Kindersitz (1) mit einem eine Sitzfläche aufweisenden Sitzflächenteil, einem eine Rückenlehne aufweisenden Rückenlehnenteil (2) sowie einem mit dem Rückenlehnenteil (2) in seiner Position relativ zu dem Rückenlehnenteil (2) verstellbar verbundenen, eine Kopfstütze (4) aufweisenden Kopfstützenteil (3), wobei zwischen dem Rückenlehnenteil (2) und dem Kopfstützenteil eine Längsführung gebildet ist für eine in einer Längsrichtung geführte Höhenverstellung des Kopfstützenteils (3) mit seiner Kopfstütze (4), **dadurch gekennzeichnet, dass** an einem ersten der Teile Kopfstützenteil (3) und Rückenlehnenteil (2) wenigstens ein eine Umfangsverzahnung (9) aufweisendes Zahnrad (7) rotierbar festgelegt ist und dass an dem zweiten der Teile Kopfstützenteil (3) und Rückenlehnenteil (2) im Bereich der Längsführung wenigstens eine sich entlang der Längsrichtung erstreckende Längsverzahnung (13) ausgebildet ist, in der das Zahnrad (7) mit seiner Umfangsverzahnung (9) kämmend eingreift, und dass wenigstens ein eine zu der Umfangsverzahnung (9) korrespondierende Außenverzahnung (12) aufweisendes Blockierelement (10) an dem ersten der Teile Kopfstützenteil (3) und Rückenlehnenteil (2) angeordnet ist, das mittels eines Betätigungselementes (6) zwischen einer Blockierstellung, in der es mit der Außenverzahnung (12) in die Umfangsverzahnung (9) des Zahnrades (7) eingreift und so eine Rotation des Zahnrades (7) verhindert, und einer Freigabestellung, in der die Außenverzahnung (12) mit der Umfangsverzahnung (9) des Zahnrades (7) nicht in Eingriff steht und so eine Rotation des Zahnrades (7) ermöglicht ist, verlagerbar ist.

2. Kindersitz (1) nach Anspruch 1, **dadurch gekennzeichnet, dass** das wenigstens eine Zahnrad (7) und das wenigstens eine Blockierelement (10) an dem Kopfstützenteil (3) angeordnet sind und dass die wenigstens eine Längsverzahnung (13) an dem Rückenlehnenteil (3) angeordnet ist.

3. Kindersitz (1) nach einem der vorhergehenden Ansprüche, **dadurch gekennzeichnet, dass** das Betätigungselement (6) an demjenigen der Teile Kopfstützenteil (3) und Rückenlehnenteil (2) angeordnet ist, an dem das wenigstens eine Zahnrad (7) und das wenigstens eine Blockierelement (10) angeordnet sind.

4. Kindersitz (1) nach einem der vorhergehenden Ansprüche, **dadurch gekennzeichnet, dass** der Abschnitt, in dem das Blockierelement (10) die Außenverzahnung (12) aufweist, in einem Kreisbogen gekrümmt gebildet ist mit einem Radius, der dem Radius der kreisförmigen Außenkontur des Zahnrades (7) entspricht.

5. Kindersitz (1) nach einem der vorhergehenden Ansprüche, **dadurch gekennzeichnet, dass** das Blockierelement (10) als Blockierhebel ausgebildet ist, mit einem Hebelarm (11), der die Außenverzahnung (12) aufweist.

6. Kindersitz (1) nach einem der vorhergehenden Ansprüche, **dadurch gekennzeichnet, dass** das Blockierelement (10) federbelastet in die Blockierstellung gezwungen ist.

7. Kindersitz (1) nach einem der vorhergehenden Ansprüche, **dadurch gekennzeichnet, dass** an dem ersten der Teile Kopfstützenteil (3) und Rückenlehnenteil zwei jeweils eine Umfangsverzahnung (9) aufweisende Zahnräder (7) rotierbar festgelegt sind und dass an dem zweiten der Teile Kopfstützenteil und Rückenlehnenteil (2) zwei sich in der Längsrichtung erstreckende Längsverzahnungen (13) ausgebildet sind, wobei je eines der Zahnräder (7) mit seiner Umfangsverzahnung (9) in je einer der Längsverzahnungen (13) kämmend eingreift, und dass zwei Blockierelemente (10) an dem ersten der Teile Kopfstützenteil (3) und Rückenlehnenteil (2) angeordnet sind, die jeweils mit Außenverzahnungen (12) versehen sind und jeweils zwischen einer Blockierstellung, in der die jeweilige Außenverzahnung (12) mit der Umfangsverzahnung (9) des zugeordneten Zahnrades (7) in Eingriff steht, und einer Freigabestellung, in der die jeweilige Außenverzahnung (12) mit der Umfangsverzahnung (9) des zugeordneten Zahnrades (7) nicht in Eingriff steht, verlagerbar sind.

8. Kindersitz (1) nach Anspruch 7, **dadurch gekennzeichnet, dass** die beiden Blockierelemente (10) mit dem Betätigungselement (6), das ein gemeinsames Betätigungselement (6) für beide Blockierelemente (10) ist, gekoppelt sind.

9. Kindersitz (1) nach einem der Ansprüche 7 oder 8, **dadurch gekennzeichnet, dass** die beiden Zahnräder (7) mit ihren Drehpunkten (8) auf einer senkrecht zu der Längsrichtung liegenden Linie angeordnet und an dem ersten der Teile Kopfstützenteil (3) und Rückenlehnenteil (2) festgelegt sind und zwischen den mit aufeinander zu weisenden Verzahnungen an dem zweiten der Teile Kopfstützenteil (3) und Rückenlehnenteil (2) angeordneten Längsverzahnungen (13) liegen.

10. Kindersitz (1) nach einem der vorhergehenden Ansprüche, **dadurch gekennzeichnet, dass** er als Sitzschale eines Kindersicherheitssitzes für Fahrzeuge ausgebildet ist.

11. Kindersitz (1) nach einem der vorhergehenden Ansprüche, **dadurch gekennzeichnet, dass** er eine Gurteinrichtung aufweist, wobei wenigstens eine Schultergurtdurchführung (5) in dem Kopfstützenteil (3) vorgesehen ist.

## Claims

1. A child seat (1) with a seat surface part having a seat surface, a backrest part (2) having a backrest and a headrest part (3) having a headrest (4) and adjustably connected to the backrest part (2) in its position relative to the backrest part (2), wherein a longitudinal guide is formed between the backrest part (2) and the headrest part for a height adjustment of the headrest part (3) with its headrest (4) guided in a longitudinal direction, **characterised in that** at least one toothed wheel (7) having a peripheral toothing (9) is rotatably fixed to a first of the parts of the headrest part (3) and the backrest part (2), and **in that** at least one longitudinal toothing (13) extending along the longitudinal direction is formed on the second of the parts of the headrest part (3) and the backrest part (2) in the region of the longitudinal guide, in which the toothed wheel (7) meshes with its peripheral toothing (9), and **in that** at least one blocking element (10) having an external toothing (12) corresponding to the peripheral toothing (9) is arranged on the first of the parts of the headrest part (3) and the backrest part (2), which blocking element (10) can be moved by means of an actuating element (6) between a blocking position in which it meshes with the external toothing (12) and a blocking position in which it is blocked, in which it engages with the outer toothing (12) in the peripheral toothing (9) of the toothed wheel (7) and thus prevents rotation of the toothed wheel (7), and a release position in which the outer toothing (12) is not in engagement with the peripheral toothing (9) of the toothed wheel (7) and thus allows rotation of the toothed wheel (7).

2. A child seat (1) according to claim 1, **characterised in that** the at least one toothed wheel (7) and the at least one blocking element (10) are arranged on the headrest part (3) and **in that** the at least one longitudinal toothing (13) is arranged on the backrest part (3).

3. A child seat (1) according to one of the preceding claims, **characterised in that** the actuating element (6) is arranged on that one of the parts headrest part (3) and backrest part (2) on which the at least one toothed wheel (7) and the at least one blocking element (10) are arranged.

4. A child seat (1) according to one of the preceding claims, **characterised in that** the section in which the blocking element (10) has the external toothing (12) is formed curved in an arc of a circle with a radius corresponding to the radius of the circular external contour of the gear wheel (7).

5. A child seat (1) according to one of the preceding claims, **characterised in that** the blocking element (10) is designed as a blocking lever, with a lever arm (11) which has the external toothing (12).

6. A child seat (1) according to one of the preceding claims, **characterised in that** the blocking element (10) is spring-loaded and forced into the locking position.

7. A child seat (1) according to one of the preceding claims, **characterised in that** two toothed wheels (7), each having a peripheral toothing (9), are rotatably fixed to the first of the parts headrest part (3) and backrest part, and **in that** two longitudinal toothed portions (13) extending in the longitudinal direction are formed on the second of the parts headrest part and backrest part (2), wherein one of the toothed wheels (7) engages with its peripheral toothing (9) in one of the longitudinal toothed portions (13) in each case in a meshing manner and **in that** two blocking elements (10) are arranged on the first of the headrest part (3) and the backrest part (2), which are each provided with external toothing (12) and are in each case arranged between a blocking position in which the respective external toothing (12) is in engagement with the peripheral toothing (9) of the associated toothed wheel (7), and a release position in which the respective external toothing (12) is not in engagement with the peripheral toothing (9) of the associated toothed wheel (7).

8. A child seat (1) according to claim 7, **characterised in that** the two locking elements (10) are coupled to the actuating element (6), which is a common actuating element (6) for both locking elements (10).

9. A child seat (1) according to one of the claims 7 or 8, **characterised in that** the two toothed wheels (7) are arranged with their pivot points (8) on a line lying perpendicular to the longitudinal direction and are fixed to the first of the parts headrest part (3) and backrest part (2) and lie between the longitudinal toothed wheels (13) arranged with toothing facing one another on the second of the parts headrest part (3) and backrest part (2).

10. A child seat (1) according to one of the preceding claims, **characterised in that** it is designed as a seat shell of a child safety seat for vehicles.

11. A child seat (1) according to one of the preceding claims, **characterised in that** it comprises a belt device, wherein at least one shoulder belt bushing (5) is provided in the headrest part (3) .

## Revendications

1. Siège pour enfant (1) avec une partie surface de siège ayant une surface de siège, une partie dossier (2) ayant un dossier et une partie d'appui-tête (3) ayant un appui-tête (4) et reliée de manière réglable à la partie dossier (2) dans sa position par rapport à la partie dossier (2), dans lequel un guide longitudinal est formé entre la partie dossier (2) et la partie d'appui-tête pour un réglage en hauteur de la partie appui-tête (3) avec son appui-tête (4) guidé dans une direc-tion longitudinale, **caractérisé par le fait qu'**au moins une roue dentée (7) ayant une denture périphérique (9) est fixée de manière rotative à une première des parties appui-tête (3) et dossier (2), et **par le fait qu'**au moins une denture longitudinale (13) s'étendant le long de la direction longitudinale est formée sur la seconde des parties appui-tête (3) et dossier (2) dans la zone du guide longitudinal, dans laquelle la roue dentée (7) s'engrène avec sa denture péri-phérique (9), et dans laquelledit au moins un élément de blocage (10) ayant une denture extérieure (12) correspondant à la denture périphérique (9) est disposé sur la première des parties appui-tête (3) et dossier (2), lequel élément de blocage (10) peut être déplacé au moyen d'un élément d'actionnement (6) entre une position de blocage dans laquelle il s'engrène avec la denture extérieure (12) et une position de blocage dans laquelle il est bloqué, dans laquelle il est en prise avec la denture extérieure (12) dans la denture périphérique (9) de la roue dentée (7) et empêche ainsi la rotation de la roue dentée (7), et une position de déblocage dans laquelle la denture extérieure (12) n'est pas en prise avec la denture péri-phérique (9) de la roue dentée (7) et permet ainsi la rotation de la roue dentée (7).

2. Siège pour enfant (1) selon la revendication 1, **caractérisé par le fait que** ladite au moins une roue dentée (7) et ledit au moins un élément de blocage (10) sont disposés sur la partie appui-tête (3) et **par le fait que** ladite au moins une denture longitudinale (13) est disposée sur la partie appui-tête (3).

3. Siège d'enfant (1) selon l'une des revendications précédentes, **caractérisé en ce que** l'élément d'actionnement (6) est disposé sur celle des parties appui-tête (3) et dossier (2) sur laquelle sont disposées ladite au moins une roue dentée (7) et ladite au moins un élément de blocage (10).

4. Siège d'enfant (1) selon l'une des revendications précédentes, **caractérisé en ce que** la section dans laquelle l'élément de blocage (10) comprenant la denture extérieure (12) est formée en arc de cercle avec un rayon correspondant au rayon du contour extérieur circulaire de la roue dentée (7).

5. Siège d'enfant (1) selon l'une des revendications précédentes, **caractérisé en ce que** l'élément de blocage (10) est conçu comme un levier de blocage, avec un bras de levier (11) qui a la denture externe (12).

6. Siège d'enfant (1) selon l'une des revendications précédentes, **caractérisé par le fait que** l'élément de blocage (10) est chargé par un ressort et forcé dans la position de verrouillage.

7. Siège d'enfant (1) selon l'une des revendications précédentes, **caractérisé en ce que** deux roues dentées (7), ayant chacune une denture périphérique (9), sont fixées de manière rotative à la première des parties appui-tête (3) et du dossier, et **en ce que** deux parties dentées longitudinales (13) s'étendant dans la direction longitudinale sont formées sur la seconde des parties appui-tête et dossier (2), dans lequel l'une des roues dentées (7) s'engage avec sa denture périphérique (9) dans l'une des parties dentées longitudinales (13) dans chaque cas de manière à s'engrener et dans lequel deux éléments de blocage (10) sont disposés sur la première partie appui-tête (3) et la partie dossier (2), qui sont chacun pourvus d'une denture externe (12) et sont dans chaque cas disposés entre une position de blocage dans laquelle la denture externe respective (12) est en prise avec la denture périphérique (9) de la roue dentée associée (7), et une position de libération dans laquelle la denture externe respective (12) n'est pas en prise avec la denture périphérique (9) de la roue dentée associée (7).

8. Siège d'enfant (1) selon la revendication 7, **caractérisé par le fait que** les deux éléments de verrouillage (10) sont couplés à l'élément d'actionnement (6), qui est un élément d'actionnement (6) commun aux deux éléments de verrouillage (10).

9. Siège d'enfant (1) selon l'une des revendications 7 ou 8, **caractérisé en ce que** les deux roues dentées (7) sont disposées avec leurs points de pivot (8) sur une ligne perpendiculaire à la direction longitudinale et sont fixées à la première des parties appui-tête (3) et dossier (2) et se trouvent entre les roues dentées longi-tudinales (13) disposées avec une denture en face l'une de l'autre sur la seconde des parties appui-tête (3) et dossier (2).

10. Siège pour enfant (1) selon l'une des revendications précédentes, **caractérisé en ce qu'**il est conçu comme une coque d'un siège de sécurité pour enfant pour véhicules.

11. Siège d'enfant (1) selon l'une des revendications précédentes, **caractérisé en ce qu'**il comprend un dispositif de ceinture, dans lequel au moins une douille de ceinture d'épaule (5) est prévue dans la partie appui-tête (3) .
